# EUROPEAN PATENT APPLICATION

(11) **EP 3 067 143 A1**
(43) Date of publication of application: **14.09.2016**
(21) Application number: 14860169.3
(22) Date of filing: 13.08.2014
(51) Int. Cl.: B23K 3/06, B23K 3/053

(54) **INDUCTION HEATING HEAD FOR MELTING AND SUPPLYING METAL MATERIAL**

(30) Priority: 08.11.2013 KR 20130135497
(71) Applicant: Dawonsys Co. Ltd., Ansan-si, Gyeonggi-do 425-110 (KR)
(72) Inventor: PARK, Sun Soon, Ansan-si Gyeonggi-do 426-732 (KR); LEE, Hae Ryong, Seoul 140-100 (KR); KIM, Young Do, Ansan-si Gyeonggi-do 426-859 (KR)
(74) Representative: v. Bezold & Partner Patentanwälte - PartG mbB
(86) International application number: PCT/KR2014/007550
(87) International publication number: WO 2015/068936

(57) **Abstract**

An induction heating head for melting and supplying a metal material includes an induction heating coil electrically connected to a high-frequency power source, and a magnetic core configured to provide a path of a magnetic flux induced by the induction heating coil. The magnetic core is made of a magnetic material and is formed in a hollow cylinder shape. The magnetic core includes an inlet portion through which the metal material is supplied into a bore of the magnetic core and an outlet portion from which the metal material is discharged. The outlet portion of the magnetic core is configured such that a magnetic flux passes through the metal material discharged through the outlet portion so as to heat and melt the metal material discharged from the magnetic core.

## Description

### Technical Field

The present invention relates to an induction heating head and, more particularly, to an induction heating head for melting and supplying a metal material. Specifically, the present invention pertains to an induction heating head for locally heating a supplied metal material and supplying the same in the molten state. The induction heating head according to the present invention is applicable to various technical fields such as soldering, metal welding, 3D printing of a metal material, and the like.

### Background Art

In recent years, most of electronic articles are subjected to soldering in order to electrically connect and mechanically fix electronic components to a printed circuit board (hereinafter referred to as a PCB). Examples of a method of soldering an electronic component to a PCB includes a method of soldering an electronic component by thermally melting a solder wire while supplying the solder wire to a soldering position (hereinafter referred to as a solder wire soldering method) and a method of soldering an electronic component by coating a solder paste between a terminal of an electronic component and a pad of a PCB and applying heat to the solder paste (hereinafter referred to as a solder paste soldering method).

In the meantime, solder alloys used in manufacturing an electronic component have a melting temperature which falls within a range of about 190°C to 300°C. When performing a soldering work, the solder alloys are heated to the melting temperature or higher. Thus, the electronic component and the PCB to be soldered are heated to a high temperature equal to or higher than an ordinary rated temperature. Particularly, in the case where soldering is performed by a reflow soldering process or a wave soldering process, which is one kind of a solder paste soldering method, the electronic component and the PCB are heated to the melting temperature of the solder alloys or higher. Even in the solder wire soldering method, the electronic component and some portions of the PCB, which make contact with a soldering iron, are locally heated to the melting temperature of the solder alloys or higher.

Thus, electronic components are manufactured to have an unnecessarily high rated temperature so that the electronic components can safely work even when they are exposed to a high temperature during a soldering process. This may increase the manufacturing cost of the electronic components. Furthermore, electronic components heated to a high temperature in a soldering process are often broken by a thermal shock. Particularly, a reflow soldering process may generate a crack in an electrolytic capacitor or a semiconductor package. Moreover, the reflow soldering process may reduce the strength of a multilayer PCB and may generate a crack around a via-hole.

An induction heating soldering apparatus for solving the problems inherent in the aforementioned conventional soldering method, particularly the problems of the wave soldering process or the reflow soldering process, is disclosed in U.S. Patent N. 6,188,052 B1 (entitled "MATRIX-INDUCTION SOLDERING APPARATUS AND DEVICE"). The apparatus disclosed in the aforementioned patent includes a plurality of induction cells disposed in a matrix pattern and a switching device. The switching device is configured to perform soldering by supplying electric power to the respective induction cells and locally melting a solder alloy coated between an electronic component mounted to a PCB and a pad of the PCB. However, the induction heating soldering apparatus disclosed in the aforementioned patent is a surface mounting device for soldering an electronic component mounted on the surface of the PCB and is hardly applicable to a solder wire soldering method. Specifically, the aforementioned patent fails to suggest a specific method or device for supplying a solder wire to magnetic fields formed by an induction coil.

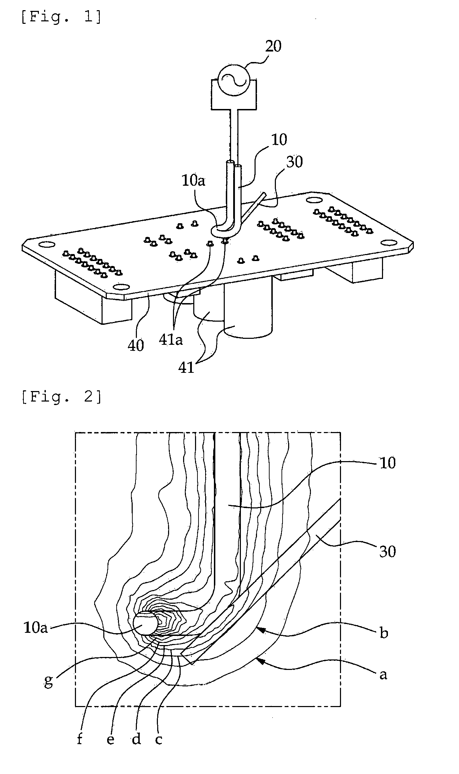

In the meantime, there is known an induction heating soldering device that can perform solder wire soldering in a non-contact manner by locally heating a terminal of an electronic component and a pad of a PCB using an induction heating method. FRISCH GmbH, Germany, has been manufacturing and selling a solder wire soldering type induction heating soldering device. An example of the soldering device is disclosed on a website of FRISCH GmbH (http://www.frisch-gmbh.de/). Fig. 1 shows one embodiment of an induction heating soldering device similar to the device disclosed on the aforementioned website. The induction heating soldering device shown in Fig. 1 includes an induction heating coil 10 and a high-frequency power source 20 connected to the opposite ends of the induction heating coil 10. An end portion 10a of the induction heating coil 10 is wound in a loop shape with one side thereof opened and is bent in an L shape. As shown in Fig. 1, the end portion 10a of the induction heating coil 10 is brought close to a terminal 41a of a component 41 inserted into a component insertion hole of a PCB 40. A solder wire 30 is brought close to the end portion 10a of the induction heating coil 10. Soldering is performed by melting the solder wire 30. If a high-frequency current flows through the induction heating coil 10, a fluctuating magnetic field is formed by an electromagnetic induction phenomenon. When a conductor is placed in the fluctuating magnetic field, an induction current is generated to heat a PCB pad and an electronic component. The solder wire 30 having a low melting point is melted to solder the PCB pad and the electronic component thus heated.

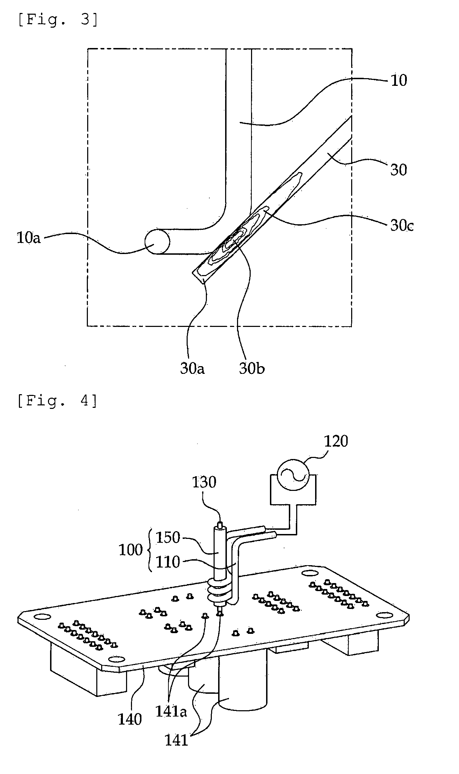

However, the conventional induction heating soldering device shown in Fig. 1 has the following problems. First, the magnetic field formed by the induction coil cannot be concentrated on a local area to be heated. Since a wide area is heated, damage may be incurred in peripheral components. Fig. 2 shows, by isolines, an energy distribution in an area heated by the induction heating soldering device shown in FIG. 1. As shown in FIG. 2, heating areas a to g are widely distributed around the end portion 10a of the coil 10. Thus, in addition to the solder wire 30, electronic components existing around the end portion 10a of the coil 10 may be heated and damaged. Furthermore, a portion located far away from an end portion of the solder wire to be heated by the induction coil may be first melted and, consequently, the end portion of the solder wire may be dropped without being melted. Thus, defective soldering may occur. FIG. 3 shows a temperature distribution in the solder wire heated by the induction heating soldering device shown in Fig. 1. As shown in Fig. 3, when the solder wire 30 is heated by the conventional induction heating soldering device to melt the solder wire 30 in an amount required in soldering, a portion 30b spaced apart by a predetermined distance from the end portion 30a of the solder wire 30 is heated to a temperature higher than the temperature of the end portion 30a of the solder wire 30. Accordingly, if one tries to melt the end portion 30a of the solder wire 30 in an amount required in soldering, melting initially occurs in a position 30c located far away from the end portion 30a. In this case, an excessive amount of solder wire may be supplied or the portion 30b having a highest temperature may be first melted earlier than the melting of the end portion 30a of the solder wire. Thus, the end portion 30a may be dropped in a non-melted state, thereby causing defective welding. Moreover, if the solder wire supplied for the purpose of soldering is disposed in the vicinity of the induction coil, the solder wire is heated by the induction coil and is thermally deformed. This makes it difficult to accurately locate the solder wire in a soldering region. In addition, if the solder wire is supplied in a posture significantly inclined with respect to the coil in order to prevent an unnecessary portion of the solder wire from being heated by the induction coil, the solder wire or the solder wire supply mechanism may interfere with electronic components. This leads to a problem in that the flexibility of the induction heating soldering device is deteriorated.

### Summary of the Invention

### Technical Problems

As the miniaturization of electronic components is underway in recent years, the leads of the electronic components become thinner and the gap between the leads grows narrower. In order to stably solder the miniaturized electronic components without causing thermal damage thereto, a demand has existed for the development of a novel soldering device capable of locally heating only a terminal of an electronic component, a pad of a PCB and a solder alloy in a non-contact manner.

Particularly, in the case where an ultra-small electronic component is soldered by a solder wire soldering method, the conventional direct-contact-type soldering device, which makes use of a soldering iron, is hardly applicable because the soldering device may generate a product defect attributable to defective soldering or damage of a component exposed to a high temperature. In recent years, there has been proposed a device which performs soldering in a non-contact manner through the use of a laser. The laser soldering device is a device that performs soldering by irradiating laser light on a solder wire, a lead of an electronic component and a pad of a PCB. However, the laser soldering device has a drawback in that if the laser light is irradiated on an electronic component or a PCB existing outside a soldering region due to the external disturbance, the electronic component or the PCB is damaged in the process of soldering. Furthermore, as described earlier, the conventional induction heating soldering device illustrated in Fig. 1 has a drawback in that it is difficult to locally heat only the soldering position of the PCB and the end portion of the solder wire and it is impossible to supply the solder wire to an accurate soldering position.

In the meantime, a demand has existed for a device which can melt and supply a metal material to a desired position. For example, in the case where there is a need to repair a mold whose specific portion is worn due to the long-time use of the mold, if a device capable of supplying a molten metal material to the worn portion of the mold is developed, it is possible to restore a high-priced mold to an original shape in a cost-effective manner and to reuse the mold. Furthermore, in the case where a crack is generated in a large-size steel structure such as a bridge or the like or in the case where there is a need to reinforce the large-size steel structure in order to cope with a load change, if a device capable of melting and welding a metal material in situ is developed, it is possible to easily repair or reinforce the large-size steel structure in a cost-effective manner. In addition, a demand has existed for a metal 3D printer capable of manufacturing a component or a product in an easy and cost-effective manner through the use of a metal material, as an alternative for a 3D printer which makes use of a plastic material. Particularly, in recent years, there is an increasing need for a device capable of cheaply and easily manufacturing a complex metal component which is not suitable for mass production.

It is an object of the present invention to provide a novel induction heating head capable of solving the problems inherent in the aforementioned induction heating soldering device and meeting the demand for a device which can melt and supply a metal material. Another object of the present invention is to provide an induction heating head capable of concentrating a magnetic field formed by an induction coil on a local area of a material to be heated. A further object of the present invention is to provide an induction heating head capable of heating only an end portion of a wire when a metal material is supplied in the form of a wire. A still further object of the present invention is to provide an induction heating head capable of accurately and easily supplying a molten metal material to a predetermined position in a desired amount.

### Means for Solving the Problems

An induction heating head for melting and supplying a metal material according to the present invention includes an induction heating coil electrically connected to a high-frequency power source and a magnetic core. The magnetic core is configured to provide a path of a magnetic flux induced by the induction heating coil. The magnetic core is made of a magnetic material and is formed in a hollow cylinder shape. The magnetic core includes an inlet portion through which the metal material is supplied into a bore of the magnetic core and an outlet portion from which the metal material is discharged.

The induction heating coil may be formed (into a solenoid shape) by spirally winding an electrically conductive wire or may be formed by circularly winding an electrically conductive plate. A hollow magnetic flux passage is formed in a central portion of the induction heating coil formed by spirally or circularly winding an electrically conductive material. If high-frequency power is applied to the induction heating coil, magnetic force lines are formed which interconnect a central portion and an external portion of the induction heating coil through closed curves. The direction of the magnetic force lines is changed depending on the frequency of the high-frequency power supply source. A conductor, which is located within magnetic fields formed by the magnetic force lines whose direction is changed by an electromagnetic induction phenomenon, is heated.

The magnetic core is made of a magnetic material and is configured to provide a path of a magnetic flux induced by the induction heating coil. The magnetic core keeps a magnetic flux from passing through the metal material inserted into a bore of the magnetic core, thereby preventing the heating of the metal material positioned in the bore of the magnetic core. The magnetic core may be made of a ferromagnetic material. However, it is preferred that the magnetic core is formed of a soft magnetic core such as a green compact core molded with an oxide or a metal powder, for example, a ferrite core, so that the magnetic core is not heated to a high temperature. The outlet portion of the magnetic core is configured such that a magnetic flux passes through the metal material discharged through the outlet portion, thereby heating and melting the metal material discharged from the bore of the magnetic core. Thus, when continuously supplied, the metal material positioned within the magnetic core is not heated by an induced current but is heated by the heat transferred from the portion of the metal material heated in the outlet portion of the magnetic core.

The metal material used in the present invention may be made of, for example, iron, iron alloy, copper, copper alloy, lead, lead alloy, aluminum or aluminum alloy. The shape of the metal material as supplied may vary depending on the use thereof. For example, the metal material may be supplied in the form of a wire or in the form of a powder. When supplied in the form of a wire, the metal material may have different forms such as a filament form, a twisted wire form or the like. When supplied in the form of a powder, the particles of the metal material may have different shapes such as a spherical shape, a circular columnar shape, a flake shape or the like.

In some embodiments, the magnetic core may be disposed inside the induction heating coil or may be disposed outside and adjacent to the induction heating coil. In the case where the magnetic core is disposed inside the induction heating coil, a solenoid-type induction heating coil formed by winding a wire or an induction heating coil formed by winding a plate in a zigzag pattern so as to define a bore may be used as the induction heating coil. The induction heating coil having a bore can concentrate a magnetic flux on the position to be soldered. The magnetic core inserted into the bore of the induction heating coil can limit the heating range of the metal material and can melt and supply the metal material by a necessary amount. Furthermore, the induction heating coil having a bore can locally heat a region to which the molten metal material adheres, by assuring that a magnetic flux is concentrated on and passes through the position to which the molten metal material is supplied.

In some embodiments, in order to heat and melt the metal material discharged from the bore of the magnetic core, it is preferred that the length of the magnetic core inserted into the bore of the induction heating coil is larger than the length of the induction heating coil and further that the outlet portion of the magnetic core is disposed so as to be slightly exposed from the end of the induction heating coil.

In the case where the outlet portion of the magnetic core has a simple planar shape perpendicular to the centerline of the magnetic core having a cylindrical shape, the magnetic force lines going out through the cut plane of the outlet portion of the magnetic core or coming into the magnetic core from the outside are formed into a curve shape bulging toward the centerline of the magnetic core. Thus, the metal material discharged through the bore of the outlet portion of the magnetic core interlinks with the magnetic force lines passing through the magnetic core, thereby inductively heating the metal material. In some embodiments, a tapered surface may be formed on the inner circumferential surface of the outlet portion of the magnetic core such that an inner diameter of the inner circumferential surface of the magnetic core increases toward the end of the outlet portion along the longitudinal direction. In the case where the magnetic force lines pass through the tapered surface of the outlet portion of the magnetic core, as compared with a case where the magnetic force lines pass through the cut plane of the outlet portion cut at a right angle, a larger number of magnetic force lines interlink with the metal material discharged through the bore of the outlet portion. In some embodiments, the outlet portion of the magnetic core may be configured to extend radially inward. If the outlet portion extends radially inward so as to face the outer circumferential surface of the metal material discharged from the outlet portion of the magnetic core, most of the magnetic force lines going out through the outlet portion or coming into the magnetic core from the outside interlink with the metal material discharged through the outlet portion. This makes it possible to effectively heat the metal material.

In some embodiments, the inlet portion of the magnetic core may be allowed to extend radially outward so that the metal material supplied into the bore of the magnetic core through the inlet portion of the magnetic core does not interlink with the magnetic force lines induced by the induction heating coil and so that the metal material supplied to the inlet portion of the magnetic core is not heated in the inlet portion. In some embodiments, a tapered surface may be formed on the outer circumferential surface of the inlet portion such that a diameter of the outer circumferential surface of the inlet portion of the magnetic core decreases toward an end of the inlet portion along the longitudinal direction. In the case where the magnetic force lines pass through the tapered surface of the inlet portion of the magnetic core, the magnetic force lines induced by the induction heating coil do not interlink with the metal material inserted into the bore of the magnetic core through the inlet portion. Thus, the metal material supplied to the inlet portion is not heated.

In some embodiments, the magnetic core may be disposed inside a solenoid-type induction heating coil formed by winding a wire or an induction heating coil formed by winding a plate. If the magnetic core is disposed in the hollow magnetic flux passage formed in the central portion of the induction heating coil, it is possible to manufacture the induction heating head in a compact form. The induction heating head according to the present invention may further include a magnetic flux guide core which is used as a passage of the magnetic force lines induced by the induction heating coil and formed outside the induction heating coil. The magnetic flux guide core may be made of a magnetic material and may be formed in a hollow cylinder shape. At least a portion of the induction heating coil may be inserted into the bore of the magnetic flux guide core. The magnetic flux guide core prevents peripheral components from being affected by the magnetic force lines induced outside the induction heating coil by the induction heating coil.

In some embodiments, the induction heating head may be formed by inserting an internal magnetic flux guide core made of a magnetic material into a magnetic flux passage defined inside the induction heating coil and by installing the magnetic core outside the induction heating coil. It is preferred that the outlet portion of the magnetic core is disposed adjacent to an end portion of the internal magnetic flux guide core so that the metal material discharged from the outlet portion interlinks with a larger number of magnetic force lines passing through the magnetic core and the internal magnetic flux guide core. The internal magnetic flux guide core may be formed in a hollow or solid cylinder shape. In addition, it is preferred that the magnetic core and the internal magnetic flux guide core are made of a soft magnetic material.

The induction heating head according to the present invention may be used in many different devices. For example, in the case where the induction heating head is installed and used in a soldering device, a solder or a solder alloy having a wire shape may be used as a metal material to be melted. In the case where the induction heating head is installed and used in a 3D printer, iron, iron alloy, copper, copper alloy, aluminum or aluminum alloy may be used as a metal material to be melted. It is preferred that the metal material is supplied in the form of a wire.

### Effects of the Invention

According to the present invention, it is possible to provide a novel induction heating head which can be applied to various technical fields. The induction heating head according to the present invention, which includes an induction heating coil and a magnetic core, can accurately melt and supply a metal material in a necessary amount by condensing magnetic fields for induction heating. In particular, it is possible to locally heat the region, to which a molten metal is to be supplied and on which a molten metal is to be laminated, in a non-contact manner. This enables the supplied molten metal to strongly adhere. In addition, by locally heating the region on which a molten metal is to be laminated, it is possible to minimize thermal influence on a workpiece, which may otherwise be generated when the region around the workpiece is widely heated.

### Brief Description of the Drawings

Fig. 1 is a schematic diagram of a conventional induction heating soldering device.
Fig. 2 is an explanatory view schematically showing an induction heating region in the induction heating soldering device illustrated in Fig. 1.
Fig. 3 is an explanatory view showing a temperature distribution in an end portion of a solder wire when the solder wire is inductively heated through the use of the induction heating soldering device illustrated in Fig. 1.
Fig. 4 is a schematic diagram of an induction heating soldering device to which an induction heating head according to one embodiment of the present invention is applied.
Fig. 5 is a sectional view illustrating a state in which a magnetic core is inserted into an induction heating coil in the induction heating soldering device to which the induction heating head according to one embodiment of the present invention is applied.
Fig. 6 is a schematic diagram illustrating a state in which a solder wire and an electronic component terminal are locally heated in the induction heating soldering device illustrated in Fig. 5.
Figs. 7(a) to 7(e) are schematic diagrams illustrating different examples of an inlet portion and an outlet portion of a magnetic core.
Fig. 8 is an explanatory view illustrating another use method of the induction heating soldering device illustrated in Fig. 4.
Fig. 9 is a schematic diagram of an induction heating soldering device to which an induction heating head according to another embodiment of the present invention is applied.
Fig. 10 is a schematic diagram of an induction heating head according to a further embodiment of the present invention.
Fig. 11 is a schematic diagram of an induction heating head according to a still further embodiment of the present invention.
Fig. 12 is a schematic sectional view of an induction heating head according to a yet still further embodiment of the present invention.
Fig. 13 is a schematic diagram of an induction heating head according to an even yet still further embodiment of the present invention.
Fig. 14 is an explanatory view illustrating another use method of the induction heating head illustrated in Fig. 13.
Fig. 15 is an explanatory view illustrating another use method of the induction heating head according to the present invention.
Fig. 16 is a schematic diagram of a 3D printer to which the induction heating head according to one embodiment of the present invention is applied.
Fig. 17 is a detailed view of the induction heating head applied to the 3D printer illustrated in Fig. 16.
Fig. 18 is a detailed view illustrating another example of the induction heating head applied to the 3D printer illustrated in Fig. 16.

### Mode for Carrying out the Invention

Preferred embodiments of the present invention will now be described in detail with reference to the accompanying drawings.

The induction heating soldering device illustrated in Fig. 4 is a device for inductively heating and soldering an end portion of solder wire 130. The induction heating soldering device includes a high-frequency power supply unit 120 and an induction heating head 100. The induction heating head 100 includes an induction heating coil 110 electrically connected to the high-frequency power supply unit 120 and a magnetic core 150. The induction heating coil 110 is formed into a solenoid form by spirally winding an electrically conductive wire such as a copper wire or the like. A hollow magnetic flux passage is formed in the central portion of the induction heating coil 110. The magnetic core 150 is formed in a hollow cylinder shape by a magnetic material so as to provide a path of a magnetic flux induced by the induction heating coil 110. The magnetic core 150 is inserted into the central portion of the induction heating coil 110. A solder wire 130 as a metal material to be melted and supplied is inserted into the bore of the magnetic core 150. While not shown in the drawings, the induction heating soldering device may further include a solder wire supply means for supplying the solder wire 130 into the bore of the magnetic core 150.

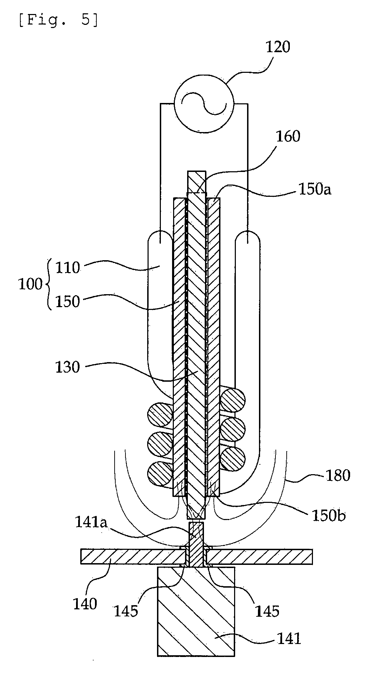

Referring to Fig. 5, if high-frequency power is applied to the induction heating coil 110 of the induction heating head 100, magnetic force lines 180 are formed which interconnect a solenoid central portion and an external portion of the induction heating coil 110 through closed curves. The direction of the magnetic force lines 180 is changed depending on the frequency of the high-frequency power supply unit 120. The magnetic force lines 180 passing through the central portion of the induction heating coil 110 pass through the magnetic core 150 inserted into the central portion of the induction heating coil 110. Since the magnetic core 150 is made of a magnetic material, the magnetic force lines 180 passing through the magnetic core 150 are concentrated. Thus, the magnetic flux density increases. The magnetic core 150 includes an inlet portion 150a into which the solder wire 130 is supplied and an outlet portion 150b from which the solder wire 130 is discharged. In general, a conductor, which is located within magnetic fields formed by magnetic force lines whose direction is changed by an electromagnetic induction phenomenon, is heated. However, the metal material such as the solder wire 130 or the like inserted into the bore of the magnetic core 150 is not heated because a magnetic field shielding region 160 through which magnetic force lines cannot pass is formed in the bore of the magnetic core 150 by the magnetic core 150. Referring to Fig. 5, the solder wire 130 passing through the magnetic core 150 and discharged from the outlet portion 150b interlinks with the magnetic flux in the outlet portion 150b of the magnetic core 150. Accordingly, only the end portion of the solder wire 130 discharged from the bore of the magnetic core 150 is heated by the electromagnetic induction phenomenon. That is to say, the magnetic core 150 enables only the end portion 130a of the solder wire 130 discharged from the outlet portion 150b of the magnetic core 150 to be heated and melted.

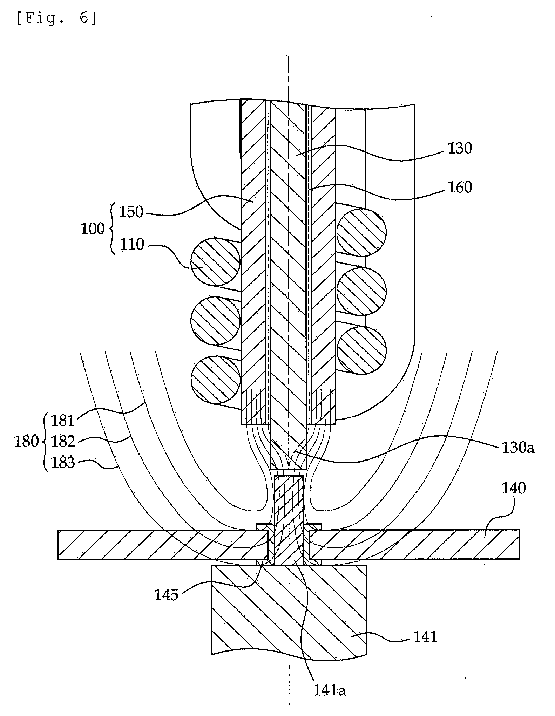

The heating principle of the end portion 130a of the solder wire 130 will now be described with reference to Fig. 6. As illustrated in Fig. 6, when the magnetic force lines 180 passing through the interior of the magnetic core 150 go out through the outlet portion 150b of the magnetic core 150 or come into the magnetic core 150, the magnetic force lines 180 are formed into a curve shape bulging toward the centerline of the magnetic core 150, due to the phenomenon that the magnetic fields are uniformly distributed in a space. Thus, the end portion 130a of the solder wire 130 exposed from the outlet portion 150b of the magnetic core 150 interlinks with the magnetic force lines 180 passing through the magnetic core 150, whereby only the end portion 130a of the solder wire 130 is heated. At this time, some of the magnetic force lines 181 to 183 passing through the end portion 130a of the solder wire 130 pass through workpieces to be soldered, namely a terminal 141a of an electronic component 141 and a metal pad 154 mounted to a printed circuit board 140, thereby heating the workpieces.

Referring to Fig. 5, the length of the magnetic core 150 inserted into the bore of the induction heating coil 110 is set larger than the length of the induction heating coil 110. Furthermore, the outlet portion 150b of the magnetic core 150 is disposed adjacent to the lower end portion of the induction heating coil 110 having a solenoid shape and is disposed so as to be slightly exposed from the end portion of the induction heating coil 110. That is to say, the inlet portion 150a of the magnetic core 150 is disposed so as to extend from the induction heating coil 110 farther than the outlet portion 150b. Thus, the density of the magnetic force lines decreases in the vicinity of the inlet portion 150a. The magnetic force lines interlinking with the solder wire 130 inserted into the inlet portion 150a of the magnetic core 150 are sparse in the vicinity of the inlet portion 150a. In the inlet portion 150a, the solder wire 130 is hardly heated. Accordingly, only the end portion of the solder wire 130 discharged from the bore of the magnetic core 150 of the induction heating head 100 to the outlet portion 150b is heated and melted. The solder wire 130 inserted into the inlet portion 150a of the magnetic core 150 is hardly heated.

According to the present invention, the magnetic core 150 of the induction heating head 100 enables the magnetic flux induced by the induction heating coil 110 to be concentrated on a target soldering position, thereby increasing the magnetic flux density. At the same time, the magnetic field shielding region 160 is formed so that the magnetic force lines do not pass through the metal material moving through the bore of the magnetic core 150. The magnetic force lines are allowed to pass through the metal material discharged from the outlet portion 150b of the magnetic core 150. That is to say, the magnetic core 150 confines the heating range of the metal material to the portion exposed from the outlet portion 150b of the magnetic core 150. This makes it possible to melt and supply the metal material by exposing the metal material from the outlet portion 150b by an amount required in melting the same. Furthermore, the magnetic core 150 serves to support the portion of the metal material other than the exposed end portion of the metal material supplied in the form of wire and to guide the metal material such as the solder wire 130 or the like supplied in the form of wire so that the metal material is accurately supplied to the processing position of workpieces. In addition, the induction heating head 100 according to the present invention can locally heat not only the metal material to be melted but also the workpieces to which a molten metal material adheres. This makes it possible to minimize the thermal influence on the workpieces. Particularly, if the induction heating head 100 according to the present invention is utilized in the induction heating soldering device, it is possible to locally heat the end portion of the solder wire 130 discharged from the outlet portion 150b of the magnetic core 150 and the portion to which the solder wire 130 is to be soldered. This makes it possible to perform accurate soldering.

While not shown in the drawings, in order to prevent the induction heating coil 110 of the induction heating head 100 from being overheated, the induction heating coil 110 may be formed of a metal pipe such as a copper pipe or the like and cooling water may be allowed to flow through the metal pipe. During the use of the induction heating head 100, an electric current is allowed to flow through the induction heating coil 110 only when the induction heating head 100 works. When the induction heating head 100 or the workpieces is moved for the next work, the electric current flowing toward the induction heating coil 110 is cut off. This makes it possible to prevent the induction heating coil 110 of the induction heating head 100 from being overheated, thereby saving energy.

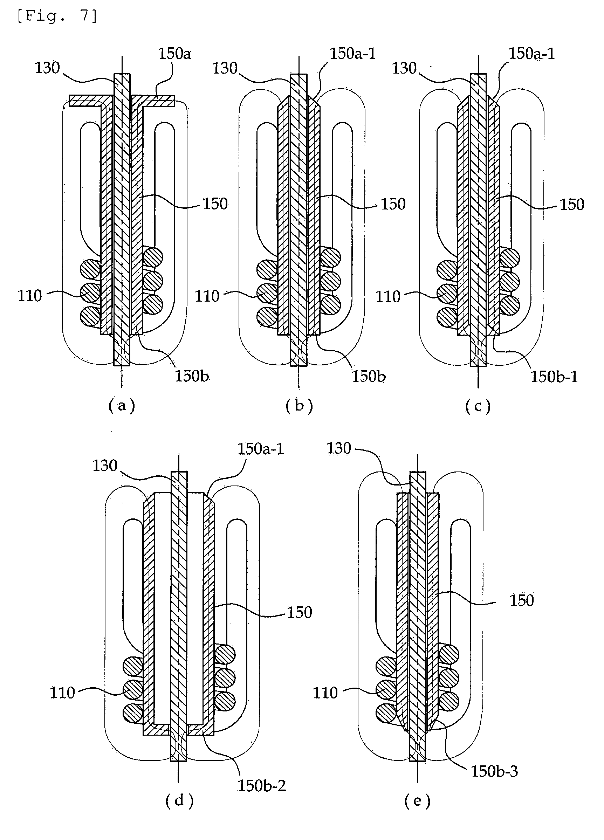

Figs. 7(a) to 7(e) are schematic diagrams illustrating different examples of the inlet portion and the outlet portion of the magnetic core. In the example illustrated in Fig. 7(a), similar to the outlet portion of the magnetic core 150 illustrated in Fig. 5, the outlet portion 150b has a simple planar shape perpendicular to the centerline of the magnetic core 150 having a cylindrical shape. However, the inlet portion 150a of the magnetic core 150 extends radially outward so as to provide a path of a magnetic flux. In the magnetic core 150 illustrated in Fig. 7(b), a tapered surface is formed on the outer circumferential surface of the inlet portion 150a-1 such that the diameter of the outer circumferential surface of the inlet portion 150a-1 decreases toward the end of the inlet portion 150a-1 along the center axis. When the magnetic force lines go out from the tapered outer circumferential surface of the magnetic core 150 or when the magnetic force lines comes into the tapered outer circumferential surface of the magnetic core 150, the magnetic force lines tend to uniformly form closed curves having a shortest path in a space. Thus, as illustrated in Fig. 7(b), magnetic force lines interlinking with the solder wire 130 are scarcely generated. In the magnetic core 150 illustrated in Fig. 7(c), unlike the magnetic core 150 illustrated in Fig. 7(b), a tapered surface is formed on the inner circumferential surface of the outlet portion 150b-1 of the magnetic core 150 such that the diameter of the inner circumferential surface of the outlet portion 150b-1 increases toward the end of the outlet portion 150b-1 along the center axis. When the magnetic force lines go out from the tapered surface of the magnetic core 150 illustrated in Fig. 7(c) or when the magnetic force lines comes into the tapered surface of the magnetic core 150, the magnetic force lines tend to uniformly form closed curves having a shortest path in a space. Thus, as illustrated in Fig. 7(c), a larger number of magnetic force lines interlink with the solder wire 130. In the magnetic core 150 illustrated in Fig. 7(d), there is formed a protrusion portion extending from the inner circumferential surface of the outlet portion 150b-2 toward the center axis. Thus, similar to the magnetic core 150 illustrated in Fig. 7(c), a larger number of magnetic force lines interlink with the solder wire 130. In the magnetic core 150 illustrated in Fig. 7(e), a tapered surface is formed on the outer circumferential surface of the outlet portion 150b-3 such that the diameter of the outer circumferential surface of the outlet portion 150b-3 decreases toward the end of the outlet portion 150b-3 along the center axis. The distribution of the magnetic force lines in the outlet portion 150b-3 of the magnetic core 150 illustrated in Fig. 7(e) is concentrated more densely than the distribution of the magnetic force lines in the outlet portion 150b of the magnetic core 150 illustrated in Fig. 7(a). Thus, a larger number of magnetic force lines interlink with the solder wire 130. This makes it possible to enhance the heating effect. The shapes of the inlet portions and the outlet portions of the magnetic cores 150 illustrated in Figs. 7(a) to 7(e) may be selectively applied depending on the necessity. The magnetic core 150 may be made of a ferromagnetic material. However, it is preferred that the magnetic core 150 is formed of a soft magnetic core such as a green compact core molded with an oxide or a metal powder, for example, a ferrite core, so that the magnetic core 150 is not heated to a high temperature. In particular, the green compact core is formed by bonding a powdery magnetic material with an insulating binder and is suitable for high-frequency power. Furthermore, the magnetic powder of the green compact core has a substantially spherical shape and, therefore, has a large demagnetizing force. Thus, the magnetic powder of the green compact core shows a feature that the relative permeability thereof is small with respect to a wide range of magnetic fields and the value of the relative permeability is not changed with respect to the magnetic fields.

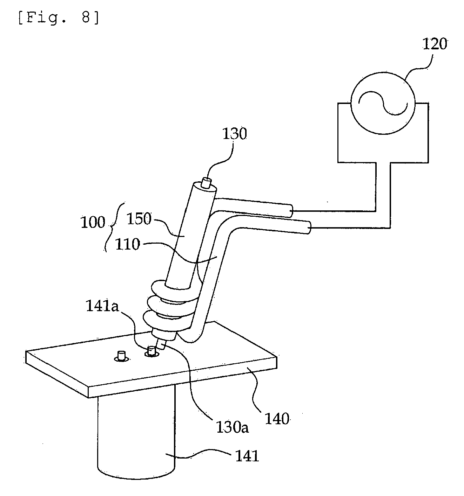

Fig. 8 is an explanatory view illustrating another use method of the induction heating soldering device illustrated in Fig. 4. As illustrated in Fig. 8, the induction heating head 100 may be used by obliquely disposing the same with respect to a PCB 140 to which an electronic component 141 is mounted. If the induction heating head 100 is used in an obliquely disposed state, it is possible not only to solder the electronic component mounted to a hole of the PCB 140 as illustrated in Fig. 8 but also to solder a component such as an electric wire or a connector not shown in the drawings. It is also possible to solder a lead wire of an electronic component mounded by a surface mounting method. In the present embodiment, the induction heating soldering device may further include a device for supplying the solder wire 130 to the magnetic core 150, which is not shown in the drawings. A supply means for supplying a metal material such as a solder or the like to the inlet portion of the magnetic core may continuously supply, for example, a solder wire wound in a roll form to the magnetic core, or may supply, for example, solder balls into the bore of the magnetic core one by one. In addition, the induction heating soldering device may further include a moving mechanism for moving the induction heating head 100 to a suitable position with respect to workpieces or a cooling device for cooling the induction heating coil 110.

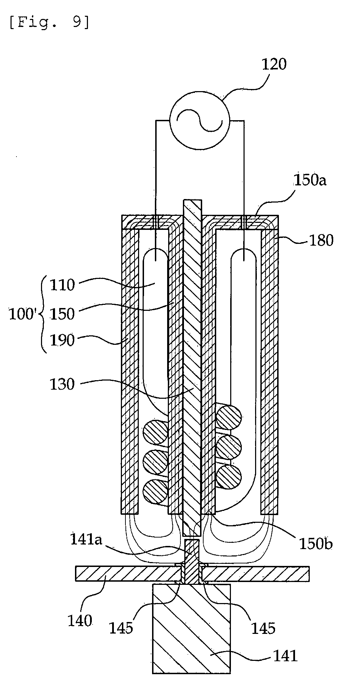

Fig. 9 is a schematic diagram of an induction heating head 100' according to another embodiment of the present invention. The induction heating head 100' illustrated in Fig. 9 differs from the induction heating head 100 illustrated in Fig. 4 in that the induction heating head 100' further includes an external magnetic flux guide core 190 for providing a path of the magnetic force lines 180 induced by the induction heating coil 110 and formed outside the induction heating coil 110. The magnetic flux guide core 190 is made of a magnetic material and is formed in a hollow cylinder shape. The induction heating coil 110 is inserted into the bore of the magnetic flux guide core 190. Furthermore, the inlet portion 150a of the magnetic core 150 extends radially outward. The magnetic flux guide core 190 prevents the components existing around the soldering device from being affected by the magnetic force lines induced outside the induction heating coil 110.

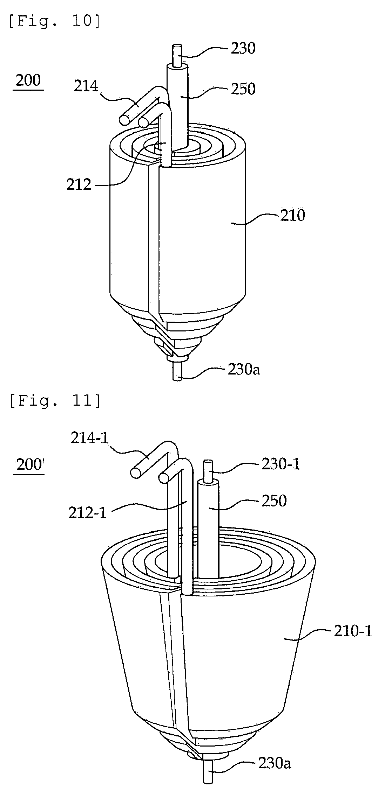

Fig. 10 is a schematic diagram of an induction heating head 200 according to a further embodiment of the present invention. The induction heating head 200 of the present embodiment differs from the induction heating head 100 illustrated in Fig. 4 in that an induction heating coil 210 is formed by winding an electrically conductive plate such as a copper plate or the like in a hollow shape and a magnetic core 250 is disposed inside the induction heating coil 210. As illustrated in Fig. 10, the induction heating coil 210 is formed by circularly winding a plate in a zigzag pattern (namely, by alternately winding a plate clockwise and counterclockwise when seen in a cross section). A bore for the insertion of the magnetic core 250 is formed in the central portion of the induction heating coil 210. An inner connection portion 214 and an outer connection portion 212 to be connected to a power supply are installed in the upper portion of the induction heating coil 210. In addition, the lower portion of the induction heating coil 210 corresponding to the outlet portion of the magnetic core 250 is formed in a conical shape so that the induction heating head 200 can easily gain access to a region (e.g., a lead of an electronic component) to which a heated solder wire is to be supplied.

Fig. 11 is a schematic diagram of an induction heating head 200' according to a still further embodiment of the present invention. The induction heating head 200' illustrated in Fig. 11 differs from the induction heating head 200 illustrated in Fig. 10 in that an induction heating coil 210-1 is formed by winding an electrically conductive plate in a conical shape so that a bore is formed in the central portion of the induction heating coil 210-1.

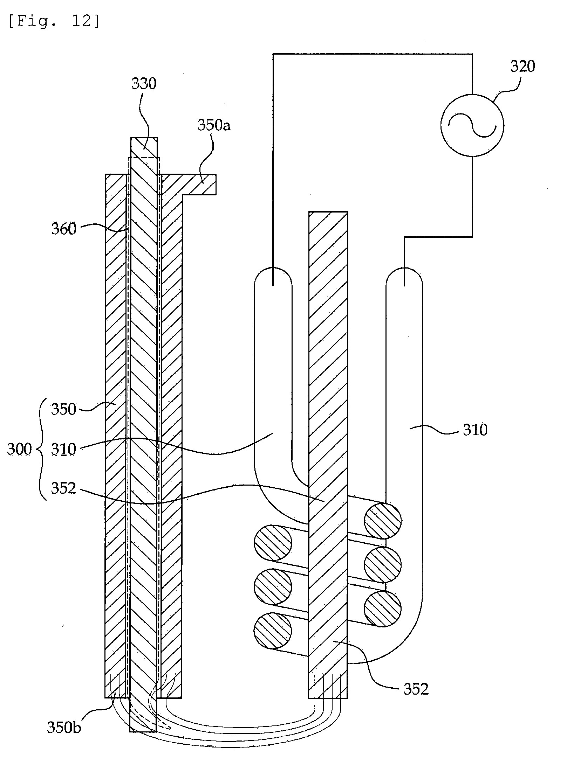

Fig. 12 is a schematic sectional view of an induction heating soldering device to which an induction heating head 300 according to a yet still further embodiment of the present invention is applied. As illustrated in Fig. 12, an induction heating head 300 is electrically connected to a high-frequency power supply unit 320 to receive electric power therefrom. The induction heating head 300 includes an induction heating coil 310, a magnetic core 350 and an internal magnetic flux guide core 352 inserted into the bore of the induction heating coil 310. The induction heating coil 310 is formed into a solenoid form by spirally winding an electrically conductive wire such as a copper wire or the like. A hollow magnetic flux passage is formed in the central portion of the induction heating coil 310. The magnetic core 350 is formed in a hollow cylinder shape by a magnetic material for providing a path of a magnetic flux induced by the induction heating coil 310 and is disposed adjacent to the induction heating coil 310. A solder wire 330 for use in a soldering work is supplied through the bore of the magnetic core 350. An inlet portion 350a of the magnetic core 350 includes an extension portion extending toward the internal magnetic flux guide core 352 in order to provide a path of a magnetic flux. In the present embodiment, the internal magnetic flux guide core 352 is formed in a solid cylinder shape. However, the internal magnetic flux guide core 352 may be formed in a hollow cylinder shape. In the case where the internal magnetic flux guide core 352 is formed in a hollow cylinder shape, a solder wire may be supplied through the bore of the internal magnetic flux guide core 352 and may be heated and melted as the solder wire is discharged from the bore of the internal magnetic flux guide core 352. Furthermore, it is preferred that the magnetic core 350 and the internal magnetic flux guide core 352 are made of a soft magnetic material so that they are not heated to a high temperature. When performing a soldering work, if a high-frequency power is applied to the induction heating coil 310, the end portion of the solder wire 330 exposed from the outlet portion 350b of the magnetic core 350 disposed adjacent to the end portion of the internal magnetic flux guide core 352 interlinks with the magnetic force lines passing through the magnetic core 350 and the internal magnetic flux guide core 352. Thus, the end portion of the solder wire 330 is heated and melted.

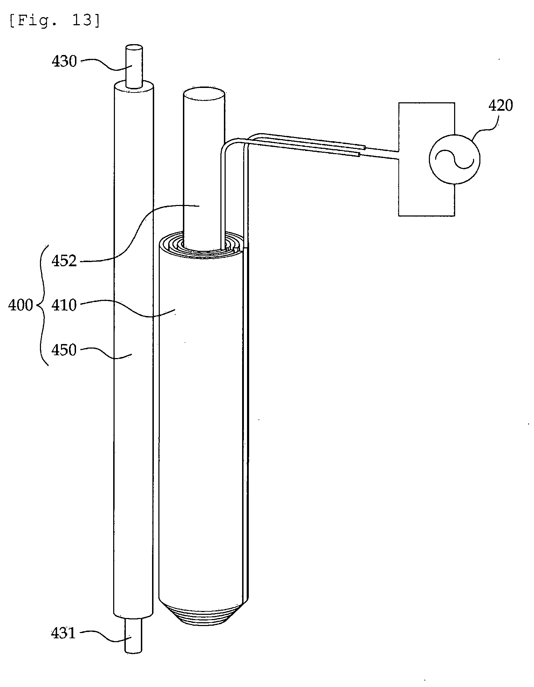

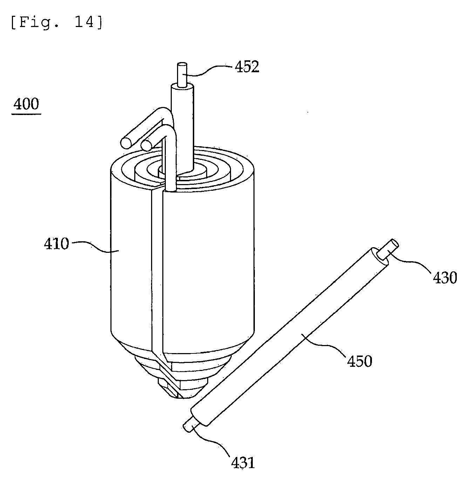

Fig. 13 illustrates an induction heating head 400 according to an even yet still further embodiment of the present invention. The induction heating head 400 illustrated in Fig. 13 differs from the induction heating head 300 illustrated in Fig. 12 in that an induction heating coil 410 is formed by winding an electrically conductive plate. The induction heating head 400 illustrated in Fig. 13 has an advantage in that it is possible to manufacture the induction heating head 400 in a compact shape and an advantage in that if the induction heating head 400 is applied to the soldering device, it is possible to perform a soldering work by locally heating a narrow region. Fig. 14 is an explanatory view illustrating another use method of the induction heating head illustrated in Fig. 13. If a magnetic core 450 applied to the soldering device is obliquely installed, it is possible to effectively perform a soldering work while avoiding interference with electronic components installed around the magnetic core 450.

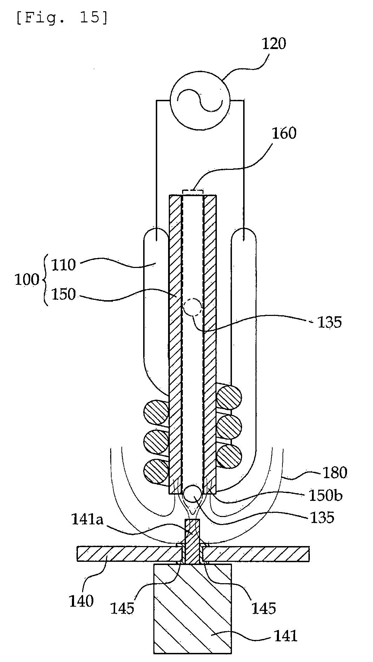

Fig. 15 illustrates a state in which a metal material in the form of solder balls 135 is melted and supplied using the induction heating head 100 according to the present invention. The soldering device illustrated in Fig. 15 differs from the soldering device employing the induction heating head 100 illustrated in Fig. 4 in that instead of the solder wire 130, the solder balls 135 are supplied into the bore of the magnetic core 150. The solder balls 135 may be supplied by preheating the same. As illustrated in Fig. 15, the solder ball 135 passing through the outlet portion 150b of the magnetic core 150 interlinks with the magnetic force lines of the magnetic core 150. Thus, the solder ball 135 is heated, melted and then dropped onto a soldering position.

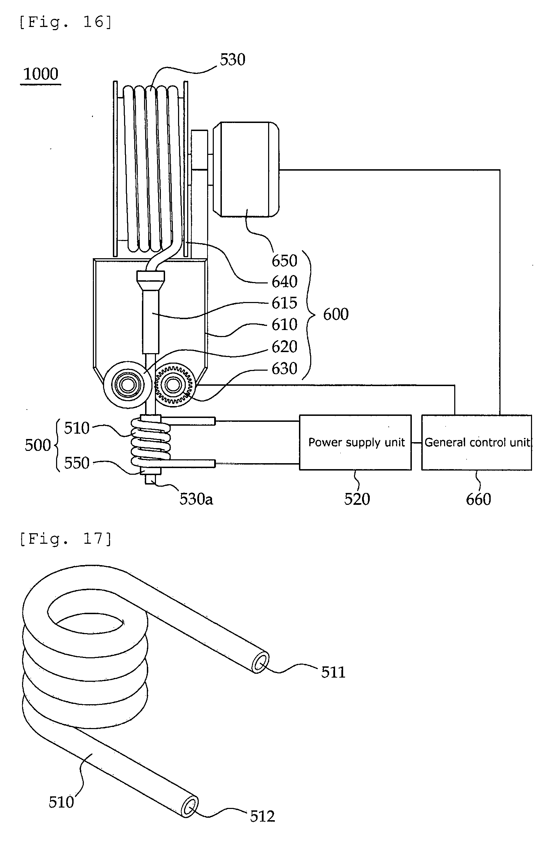

Fig. 16 illustrates a 3D printer 1000 to which an induction heating head 500 according to the present invention is applied. The 3D printer 1000 according to the present invention includes an induction heating head 500, a power supply unit 520 for supplying high-frequency power to the induction heating head 500, a material supply unit 600 for supplying a wire-type metal material 530 to the induction heating head 500, and a general control unit 660 for supplying electric power in keeping with a material supply speed of the material supply unit 600.

The induction heating head 500 includes an induction heating coil 510 and a hollow magnetic core 550 inserted into a bore of the induction heating coil 510. As the induction heating head 500, it may be possible to use the induction heating head illustrated in Fig. 4 or 10.

The material supply unit 600 includes a reel 640 installed on a frame 610 so that a metal wire 530 is wound around the reel 640, and a motor 650 connected to a shaft of the reel 640 so as to rotate the reel 640. A guide member 615 for guiding the metal wire 530 unwound from the reel 640 and an idle roller 620 and a feed roller 630 for supplying the metal wire 530 passed through the guide member 615 at a constant speed. The metal wire 530 is sandwiched between and fed by the idle roller 620 and the feed roller 630. Teeth are formed on the outer circumferential surface of the feed roller 630 to prevent slip of the metal wire 530. While not shown in Fig. 16, a motor is installed to rotate the feed roller 630. The general control unit 660 controls rotation of the feed roller 630 and controls a supply speed of the metal wire 530 for use in a 3D printing work. In some embodiments, if the metal wire 530 can be supplied by only the feed roller 630, the motor 650 for driving the reel 640 may be omitted.

In some embodiments, in the case where a 3D component or a 3D product having an arbitrary shape is manufactured by melting a wire-type metal material, if a wire material having a rectangular cross-sectional shape is used in place of a wire material having a circular cross-sectional shape, it is possible to reduce a surface roughness of a product manufactured by the 3D printer, thereby improving the quality of a 3D printed product.

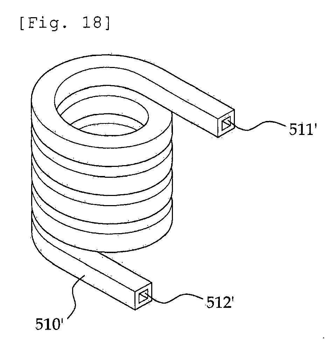

Fig. 17 is a perspective view of an induction heating coil 510 according to one embodiment of the present invention. The induction heating coil 510 is formed by spirally winding a pipe. Cooling water is supplied into an inlet 511 of the induction heating coil 510 and is discharged from an outlet 512 of the induction heating coil 510. This makes it possible to prevent the induction heating coil 510 from being overheated. While not shown in the drawings, the 3D printer may further include a cooling water supply unit for cooling the induction heating coil 510. Fig. 18 is a perspective view of an induction heating coil 510' according to another embodiment of the present invention. The induction heating coil 510' is formed by spirally winding a pipe having a rectangular cross-sectional shape. If the pipe having a rectangular cross-sectional shape is used, a magnetic flux generation area becomes wider than when a pipe having a circular cross-sectional shape is used. It is therefore possible to enhance the induction heating efficiency.

It is to be understood that the embodiments of the present invention described above are not intended to limit the present invention but are exemplary. The induction heating head according to the present invention may be modified in many different forms. The induction heating heads modified in many different forms within the scope of the claims and the equivalent scope thereof may be regarded as specific embodiments of the present invention.

## Claims

1. An induction heating head for melting and supplying a metal material, comprising:
an induction heating coil electrically connected to a high-frequency power source; and
a magnetic core configured to provide a path of a magnetic flux induced by the induction heating coil, the magnetic core made of a magnetic material and formed in a hollow cylinder shape, the magnetic core including an inlet portion through which the metal material is supplied into a bore of the magnetic core and an outlet portion from which the metal material is discharged,
wherein the outlet portion of the magnetic core is configured such that a magnetic flux passes through the metal material discharged through the outlet portion so as to heat and melt the metal material discharged from the magnetic core.

2. The induction heating head of claim 1, wherein the magnetic core is larger in length than the induction heating coil and is inserted into the induction heating coil, the outlet portion of the magnetic core disposed adjacent to one end portion of the induction heating coil so that the outlet portion is exposed from the induction heating coil.

3. The induction heating head of claim 2, wherein the induction heating coil is formed by spirally winding an electrically conductive wire.

4. The induction heating head of claim 2, wherein the induction heating coil is formed by circularly winding an electrically conductive plate.

5. The induction heating head of claim 2, wherein the outlet portion of the magnetic core is tapered such that an inner diameter of the outlet portion increases toward an end of the outlet portion along a longitudinal direction.

6. The induction heating head of claim 2, wherein the outlet portion of the magnetic core is tapered such that an outer diameter of the outlet portion decreases toward an end of the outlet portion along a longitudinal direction.

7. The induction heating head of claim 2, wherein the outlet portion of the magnetic core extends radially inward.

8. The induction heating head of claim 2, wherein the inlet portion of the magnetic core extends radially outward, and further comprising:
an external magnetic flux guide core configured to provide a path of a magnetic flux induced by the induction heating coil, the external magnetic flux guide core made of a magnetic material and formed in a hollow cylinder shape, at least a portion of the induction heating coil inserted into a bore of the external magnetic flux guide core.

9. The induction heating head of any one of claims 2 to 8, wherein the magnetic core is made of a soft magnetic material.

10. The induction heating head of claim 9, wherein the magnetic core made of the soft magnetic material is a green compact core.

11. The induction heating head of claim 1, further comprising:
an internal magnetic flux guide core configured to provide a path of a magnetic flux induced by the induction heating coil, the internal magnetic flux guide core made of a magnetic material and formed in a hollow cylinder shape, the internal magnetic flux guide core inserted into the induction heating coil,
wherein the outlet portion of the magnetic core is disposed adjacent to an end portion of the internal magnetic flux guide core.

12. The induction heating head of claim 11, wherein the induction heating coil is formed by spirally winding an electrically conductive wire.

13. The induction heating head of claim 11, wherein the induction heating coil is formed by circularly winding an electrically conductive wire.

14. The induction heating head of claim 11, wherein the outlet portion of the magnetic core is tapered such that an inner diameter of the outlet portion increases toward an end of the outlet portion along a longitudinal direction.

15. The induction heating head of claim 11, wherein the inlet portion of the magnetic core includes an inlet magnetic flux guide portion extending radially outward.

16. The induction heating head of any one of claims 11 to 15, wherein the internal magnetic flux guide core is made of a soft magnetic material.
